# EUROPEAN PATENT SPECIFICATION

(11) **EP 1 197 013 B1**
(45) Date of publication and mention of the grant of the patent: **16.02.2011**
(21) Application number: 00946189.8
(22) Date of filing: 21.07.2000
(51) Int. Cl.: H04B 7/26

(54) **METHOD FOR INCREASING THE COVERAGE AREA OF A BASE STATION**
VERFAHREN ZUR ERWEITERUNG DER VERSORGUNGSFLÄCHE VON EINER FESTSTATION
SYSTEME DE COMMUNICATION

(30) Priority: 22.07.1999 GB 9917272
(43) Date of publication of application: 17.04.2002
(73) Proprietor: Sepura plc, Cambridge CB4 1GR (GB)
(72) Inventor: FRAYLING-CORK, Robert, Maxwell, Cambridge CB4 3EL (GB)
(74) Representative: Tothill, John Paul
(86) International application number: PCT/GB2000/002819
(87) International publication number: WO 2001/008315

(56) References cited:
- GB-A- 2 318 026
- US-A- 5 400 362
- US-A- 5 745 484
- OWEN D P: "TETRA - THE NEW GLOBAL STANDARD FOR PRIVATE MOBILE RADIO" GEC REVIEW,GB,GENERAL ELECTRIC COMPANY. CHELMSFORD, ESSEX, vol. 13, no. 1, 1998, pages 33-37, XP000859806 ISSN: 0267-9337

## Description

The present invention relates to communications systems having timeslot divided transmission and reception and in particular to time division multiple access (TDMA) mobile radio systems such as the TETRA (TErrestrial Trunked RAdio) system.

In TDMA systems, signals are, as is known in the art, transmitted as a succession of independent timeslots. These timeslots usually each have the same basic predefined structure.

To be able to decode a received TDMA signal correctly, the receiver must be able to identify the individual time slots. Furthermore, it must transmit its reply timeslots with such timing that the original transmitter can identify them and thus decode the reply signal properly. In practice the transmitter and receiver usually aim to synchronise the positions of the timeslots in their transmission to assist this process.

Such synchronisation is usually achieved in TDMA systems, e.g. TDMA mobile radio systems, as is known in the art, by one transceiver acting as a timeslot timing control and the other transceiver synchronising the timeslot timing of its reply to the control transceiver to the timeslot timing of the signal received from the control transceiver. The control transceiver will in a mobile radio system normally be a fixed based station of the mobile radio network, but it could also be a mobile station where appropriate (for example where mobile stations are communicating directly with each other independently of the fixed radio network, such as when TETRA mobile stations are operating in the TETRA direct mode) (see, e.g., GB-A-2318026).

Thus, for example, in a mobile radio system a base station will transmit to one or more mobile stations on a given carrier frequency. The receiving mobile stations will identify the positions of the timeslots in the received signal and synchronise their transmissions to the base station (which will normally take place on a different carrier frequency) to the timing that they have derived from the received signal, i.e. each mobile station will try to make the (start) timing positions of the timeslots in their reply to the base station coincide exactly with the (start) timing positions of timeslots in the received signal from the base station. The base station knows that the mobile station's reply should be synchronised to its transmission and so bases its processing of the received signal from the mobile station on the assumption that the timing positions of the timeslots in the received signal will coincide exactly with the timing positions of timeslots in its transmitted signal.

However, although a given receiving remote station will attempt to synchronise to the primary transmitting transceiver's transmission, in practice the timing positions of the timeslots in the reply signal received by the primary transceiver from that remote station will tend not to coincide exactly with the timing positions of the timeslots in the primary transceiver's transmitted signal. This can be, for example, because the remote station makes an error in its synchronisation, and also because radio flight time delays will cause firstly the remote station to receive a delayed signal from the primary transceiver to which it then synchronises, and also cause the remote station's reply signal to be delayed relative to its intended timing position when it arrives at the primary transceiver.

There is therefore usually provided a mechanism whereby a receiving transceiver can search for and identify the actual positions of the timeslots in a received signal. This is usually done by the receiver analysing a captured portion of the received signal at each of a plurality of predetermined time delays or offsets relative to a selected start position in the captured signal portion to identify the timing offset that gives a particular result, such as maximises or minimises a particular property. The timing position of the timeslots in the received signal for subsequent signal processing would then be selected on the basis of that timing offset.

One such timeslot position searching technique involves the receiver assessing the correlation of the received signal portion with a reference signal sequence at each timing offset. The receiver would then select the timing offset giving the best correlation. In other words, the receiver searches the received signal for known, identifiable signal structures, such as bit sequences, in the received signal, to identify the position of those predetermined structures in the received signal and thereby the timing position of the overall timeslot. To assist this process a predefined structure or signal portion is often included at a predetermined relative position in each timeslot that thus marks the position of the timeslot. These predefined marker signal portions are often referred to as training sequences.

The correlation check thus comprises assessing the correlation of a reference training sequence with the selected received signal portion where the training sequence is expected to be (which expected position, for example in the case of a mobile radio system base station, is determined on the assumption that the received signal timeslots will coincide with the timing positions of the timeslots in the base station's transmitted signal) for each of a set of predetermined timing offsets from a selected start position in the captured signal portion. The timing offsets effectively move the position of the reference training sequence to different relative positions in the captured signal portion. The timing offset with the best correlation (i.e. best match) gives the position of where in the captured signal portion the training sequence in the received signal is.

The timing position search could also, for example, comprise performing a mathematical function on the captured signal portion at each timing offset and using the offset that maximises or minimises the function, or most closely approaches a particular value (such as zero) of the function.

The maximum timing offset after the search start position in the captured signal portion at which the signal analysis, e.g. training sequence search, is carried out, determines how late relative to the expected time slot timing position (e.g. in the case of a radio base station how late relative to the timeslots in the transmitted signal) the timeslot in the received signal can be properly received. This is because the search will be unable to identify a later timing position and the receiver will be unable to process properly a later timeslot using the timing position represented by the maximum timing offset.

It is generally not desirable to allow a receiver to attempt to decode timeslots no matter how late they are received. For example, a mobile radio system base station may receive signals from two different sources, e.g. mobile stations, on immediately successive timeslots. If a signal in the first timeslot is from a first, more distant, mobile station and is received at such a delay that it overlaps with a signal in the second timeslot transmitted by a second, closer, mobile station, then it is usually very unlikely for the receiver to be able to decode properly the first timeslot, because the transmission from the near mobile station will obliterate the distant mobile station's transmission during the period when their transmissions overlap. Losing useful data from a signal in this way can make it very hard to decode the timeslot correctly.

Thus the timeslot position searching process of receivers such as base stations is usually arranged such that the receiver does not search for timeslot positions where there is a risk of useful data in the timeslot overlapping with the next timeslot, i.e. such that the receiver cannot attempt to decode timeslots whose useful data could have overlapped the next received timeslot. The timeslot structure will usually therefore include a buffer period at the end of each timeslot where no useful data is transmitted to allow for timing variations. (In the TETRA timeslot structure this buffer period comprises the guard period (which contains no data) and the tail bits (which are used to flush through filters but don't contain any useful data and so can be discarded)). Any overlap of the buffer period into the next timeslot will not therefore adversely affect the signal processing. It is usually therefore assumed that a timeslot received at a timing offset up to the length of the buffer period after the search start position can be safely received, but thereafter there is a risk of detrimental signal overlap occurring. For this reason, the maximum timing offset after the search start position at which the timeslot position is searched for is set to the length of the buffer period, e.g. tail bits and guard period in TETRA, to try to prevent the receiver possibly trying to decode a received timeslot whose useful data could have overlapped into the next timeslot.

One consequence of limiting the timeslot position search maximum timing offset to be no more than the buffer period at the end of each timeslot is that in effect the maximum outward (downlink) and inward (uplink) signal round trip flight time that a signal can be received at is limited to the buffer period at the end of the timeslot. This limits the total usable range of the transceiver. For example the total range of a TETRA base station operating under this restriction is around a 60 km radius. This range limit is satisfactory in most instances, but in certain circumstances it could be useful for a base station to operate over a much longer range. This could be the case where, for example, the base station can be well positioned, or where a high gain directional transmission and reception aerial is employed, or for aircraft or maritime applications.

One way to extend the transceiver's range would be simply.to extend the buffer, e.g. guard period, but this is undesirable as it wastes transmission resource. Another technique used in the GSM (Global System for Mobile Communications) system is so-called "timing advance", where distant mobile stations are controlled by a base station to transmit their signals to the base station early to account for possible flight time delay. However, this technique requires constant extra signalling for the base station positively to control the distant mobile stations to adjust their signal timing, and the distant mobile stations to be able to modify their operation accordingly.

According to a first aspect of the present invention, there is provided a method of operating a receiver of a time division multiple access communications system, which receiver can in use receive signals from different other transceivers of the system on successive timeslots and in which system each transmitted timeslot includes at its end a predetermined buffer period in which no useful data is transmitted, the method comprising:
the receiver identifying the timing position of the timeslots in a received signal by analysing a selected captured portion of the received signal at each of a set of predetermined timing offsets with respect to a selected start relative timing position in the captured portion of the received signal, and characterised in that:
   the maximum timing offset in the set of predetermined timing offsets is greater than the predetermined buffer period in which no useful data is transmitted.

According to a second aspect of the present invention, there is provided a receiver for a time division multiple access communications system, which receiver can in use receive signals from different other transceivers of the system on successive timeslots and in which system each transmitted timeslot includes at its end a predetermined buffer period in which no useful data is transmitted, the receiver comprising:
means for identifying the timing position of the timeslots in a received signal by analysing a selected captured portion of the received signal at each of a set of predetermined timing offsets with respect to a selected start relative timing position in the captured portion of the received signal;
wherein the maximum timing offset in the set of predetermined timing offsets is greater than the predetermined buffer period in which no useful data is transmitted.

In these aspects of the present invention, the maximum timing offset after the timing position search start position at which the received signal is analysed to try to determine its timing position is greater than the predetermined buffer period at the end of each timeslot in which no useful data is transmitted (e.g. the tail bits and guard period in a TETRA timeslot). By using a greater maximum permitted timing offset, the delay at which signals can still be properly received is increased.

The invention is, as will be apparent from the above, particularly applicable to transceivers of TDMA communication systems which transmit to plural other transceivers of the system and receive replies therefrom, particularly where replies from different remote transceivers can arrive on successive timeslots on a given carrier frequency, and particularly where the remote transceivers attempt to synchronise to the signal received from the primary transceiver and transmit reply signals to the primary transceiver at a timing position based on their synchronisation attempt. Thus it is, for example, particularly applicable to the operation of base stations of a TDMA mobile radio communications system. By using a greater maximum permitted timing offset, the maximum round trip flight time at which the transceiver attempts to receive signals is extended and thus so is the range at which the transceiver can communicate with a distant station.

Extending the timing position at which a signal can be received in this manner will, as noted above, risk reception problems due to possible overlap with a signal received in the next succeeding timeslot, since the maximum timing offset will be sufficiently large that useful data in a timeslot received at that timing offset later than its ideal position will overlap with an immediately succeeding timeslot received at no delay. However, the Applicants have recognised that such overlap may not in practice always occur or necessarily result in loss of the signal in the earlier timeslot, and so the reception of the delayed signal by the receiver may not be too detrimentally affected, or at least not so much as to outweigh the advantage of the increased range.

Preferably, however, steps are taken to reduce the risk of there being overlap between useful data in a delayed received timeslot and any signal transmitted in the next succeeding timeslot. This is preferably done by controlling the system such that the other transceivers of the system do not transmit their replies to the initial transceiver operating in accordance with the invention in the part of a timeslot into which useful data in a delayed immediately preceding timeslot could have extended.

This can be achieved by, for example, controlling the remote transceivers, e.g. mobile stations, of the system not to transmit signals during the first part of each time slot. In this case the maximum timing offset in.the set of search timing offsets is preferably set equal to or less than the buffer period at the end of a timeslot containing no useful data plus the unused time period at the start of each timeslot (which would normally be a known, predetermined period).

For example in many TDMA mobile radio systems, such as the TETRA system, the first part of each timeslot is set aside for mobile stations to ramp up and linearise their transmitters' power amplifiers. The Applicants have recognised that a mobile station transmitting on the next timeslot may not in fact use all of this power amplifier ramping and linearisation period or can be controlled not to use all of it. If the mobile station does not use the first part of the power amplifier ramping and linearisation period then an overlap of the previous timeslot into the unused.part of the power amplifier ramping and linearisation period of the next timeslot will not cause any reception difficulties.

Preferably therefore, if it is possible to control mobile stations of a mobile radio system to only use a portion of the allotted power amplifier ramping and linearisation period in each timeslot, they are controlled to do so and to do their power amplifier ramping and linearisation at the end rather than the beginning of the power amplifier ramping and linearisation period. This ensures that the first part of the power amplifier ramping and linearisation period of each timeslot will be free from signals and thus a preceding timeslot can extend into that signal-free part safely. In this case the maximum timing offset in the set of search timing offsets is preferably set equal to the buffer period at the end of each timeslot plus the (known) unused time period at the start of the power amplifier ramping and linearisation period, i.e. the buffer period plus the power amplifier ramping and linearisation period minus the (known) length of the short power amplifier ramping and linearisation time that the mobile stations will actually use. The Applicants have found that for the TETRA system it is possible to arrange mobile stations to use a shorter power amplifier ramping and linearisation time and that if a base station is allowed to use the extra overlap-free time period this provides, its range can be extended to approximately 150 km radius or more (i.e. over double the normally expected range).

Thus according to a third aspect of the present invention, there is provided a method of operating a time division multiple access communication system in which a first transceiver transmits to one or more remote transceivers of the system and receives signals therefrom, and in which system each transmitted timeslot includes at its end a predetermined buffer period in which no useful data is transmitted, the method comprising:
controlling the remote transceivers not to transmit during a predetermined time period at the start of each transmission timeslot; and
the first transceiver identifying the timing position of the timeslots in a received signal from one of the remote transceivers by analysing a selected captured portion of the received signal at each of a set of predetermined timing offsets with respect to a selected start relative timing position in the captured portion of the received signal; wherein
the maximum timing offset in the set of predetermined timing offsets is greater than the predetermined buffer period at the end of each timeslot but less than or equal to the sum of the predetermined buffer period and the predetermined time period at the start of each transmission timeslot during which the remote transceivers are controlled not to transmit.

According to a fourth aspect of the present invention, there is provided a transceiver for a time division multiple access communication system which transceiver transmits to one or more remote transceivers of the system and receives signals therefrom, and in which system each transmitted timeslot includes at its end a predetermined buffer period in which no useful data is transmitted, the transceiver comprising:
means for identifying the timing position of the timeslots in a received signal from one of the remote transceivers by analysing a selected captured portion of the received signal at each of a set of predetermined timing offsets with respect to a selected start relative timing position in the captured portion of the received signal; and
means for controlling the remote transceivers not to transmit during a predetermined time period at the start of each transmission timeslot; wherein
the maximum timing offset in the set of predetermined timing offsets is greater than the predetermined buffer period at the end of each timeslot but less than or equal to the sum of the predetermined buffer period and the predetermined time period at the start of each transmission timeslot during which the remote transceivers are controlled not to transmit.

Another way of ensuring that transceivers of the system do not transmit such that there is a risk of overlap of useful data in the first timeslot with a signal in the following timeslot is to only permit transmission to the initial transceiver in alternate timeslots (e.g. for a radio base station to only permit receptions in alternate timeslots). This would allow the maximum time delay at which a timeslot is received to be extended up to the duration of an entire timeslot plus the non-useful data buffer period (e.g. tail bits and guard period) at the end of each timeslot and thus extend the range of the transceiver greatly. This arrangement does reduce the bandwidth efficiency of the system, e.g. base station, since only alternate timeslots would be used. However, this could be acceptable in low traffic density situations such as sparsely populated rural or maritime areas (where the increased range may also be particularly desired or useful).

Thus, according to a fifth aspect of the present invention, there is provided a method of operating a time division multiple access communications system in which a first transceiver transmits signals to other transceivers of the system and receives signals therefrom, and in which system each transmitted timeslot includes at its end a predetermined buffer period in which no useful data is transmitted, the method comprising:
the first transceiver controlling the sending of signals to it by the other transceivers of the system such that it only receives signals from the other transceivers in alternate timeslots on a given carrier frequency; and
the first transceiver identifying the timing position of the timeslots in a received signal by analysing a selected captured portion of the received signal at each of a set of predetermined timing offsets with respect to a selected start relative timing position in the captured portion of the received signal;
wherein the maximum timing offset in the set of predetermined timing offsets is greater than the predetermined buffer period in which no useful data is transmitted at the end of each timeslot but less than or equal to the sum of the predetermined buffer period and the duration of a timeslot.

According to a sixth aspect of the present invention, there is provided a transceiver for a time division multiple access communications system, which transceiver transmits signals to other transceivers of the system and receives signals therefrom, and in which system each transmitted timeslot includes at its end a predetermined buffer period in which no useful data is transmitted, the transceiver comprising:
means for controlling the sending of signals to it by the other transceivers of the system such that it only receives signals from the other transceivers in alternate timeslots on a given carrier frequency; and
means for identifying the timing position of the timeslots in a received signal by analysing a selected captured portion of the received signal at each of a set of predetermined timing offsets with respect to a selected start relative timing position in the captured portion of the received signal;
wherein the maximum timing offset in the set of predetermined timing offsets is greater than the predetermined buffer period in which no useful data is transmitted at the end of each timeslot but less than or equal to the sum of the predetermined buffer period and the duration of a timeslot.

In a particularly preferred embodiment of the present invention, the receiver is arranged to process received signals in such a manner as to lessen the effect on the signal decoding process of any timeslot overlap that may occur. This can be in addition to or as an alternative to the above techniques for trying to avoid detrimental overlap occurring in the first place.

Thus the receiver preferably processes a received timeslot in two separate parts, the first part comprising a portion of the timeslot for which there should not be any risk of overlap with a following timeslot, and preferably which cannot have overlapped with a following timeslot, and the second part containing the remaining data in the timeslot (i.e. including all the data where there is a risk that overlap has occurred).

The receiver then derives its signal processing information for decoding the timeslot, such as frequency offset, sampling time offset, and update parameters for any channel equalisation, from only the first part of the timeslot and stores it. It then uses the data derived from the first part of the timeslot to process the entire timeslot (i.e. both the first and the second part of the timeslot), i.e. such that only signal processing information derived from the first part of the timeslot is used to process the timeslot and no signal processing information is derived nor used from the second part of the timeslot. This reduces the possibility of any data lost in the overlapping part of the timeslot preventing the entire timeslot from being decoded properly. In this arrangement, any overlap leading to loss of data will tend to result in loss of the overlapping data only, which will be less detrimental to the overall reception of the signal. For example, it may be that the lost overlapping data can be recovered by forward error correction processes, such as might be the case where it is protected data such as speech.

This contrasts with the case where signal processing of a received timeslot for such things as frequency and timing correction is estimated using all the data in the entire timeslot, since in that case the presence of the overlapping data will tend to cause the receiver to be unable to decode the entire timeslot, and thus the whole reception from the distant station will tend to be lost if overlap occurs, rather than only the overlapping part of the transmission being lost.

In these arrangements the timeslot would normally be processed as a whole, i.e. the first and second parts would be processed together (but using only the data derived from the first part of the timeslot). However, where it is known that the first part (e.g. half) of the timeslot has been stolen (i.e. replaced with other data), which can, e.g., be indicated by the training sequence included in the timeslot, each part of the timeslot could be processed separately (e.g. by applying the channel coding separately to each part), although the signal processing data derived from the first part of the timeslot would still be used to process both parts of the timeslot.

The size of the first part of the timeslot is preferably maximised, subject to it not containing any portion of the timeslot that could have overlapped the next timeslot, as this provides more data to perform the signal processing on. Where the receiver is a transceiver that transmits to the other transceivers which then attempt to transmit to the first transceiver at a timing matching the first transceiver's transmissions, this can be achieved by the first part to be processed comprising the data in the received timeslot up to a relative timing position in the received timeslot which is not greater than and preferably equal to a timing position corresponding to the position that would have been the end of the timeslot had it been received without any delay relative to the transceiver's transmission timeslots. The second part would then be the remaining portion of the timeslot after the first part.

In a preferred embodiment, the receiver is arranged such that once the timing position of a received timeslot from a particular distant station is successfully identified, the size of the captured signal portion over which the timing position search is carried out is reduced to a smaller, e.g. predetermined size, from its initial size for all subsequent timeslots from that distant station during that particular reception. This is advantageous because the larger the searched signal portion, the more likely the risk of the receiver mistakenly identifying a suitable timing position in the wrong part of the captured signal portion. Once the timing position of a received timeslot has been found, reducing the size of the signal portion over which the search is carried out reduces the risk of this happening.

The timing position of the timeslots can be searched for as desired, e.g. using any of the techniques discussed above. Thus where each transmitted timeslot includes a predetermined marker signal portion, e.g. training sequence, at a predetermined relative position within the timeslot, whereby the start and finish of the timeslot may be identified, the receiver can identify the timing position by searching for the predetermined marker signal portion in the received signal by comparing, e.g. checking the correlation of, the captured portion of the received signal with a stored reference copy of the predetermined marker signal portion at each of the set of predetermined timing offsets with respect to the selected start relative timing position in the captured portion of the received signal, to find the timing offset giving the best match.

Alternatively, the search could, for example, comprise performing a mathematical function such as a checksum on the captured signal portion at each timing offset, to find the timing offset that gives or most closely approaches a particular result, e.g. maximises or minimises the value of the function, or most closely approaches a particular value of the function.

As a further alternative, the search could, for example, comprise identifying the position of a distributed marker in the received signal. For example, the captured signal portion could have an unscrambling process that should recreate from the distributed marker in the received signal a given signal sequence carried out at each of the predetermined timing offsets to find the offset that recreates the given signal sequence or maximises the likelihood that the transmitted signal has been recreated.

The start position of the timeslot position search would normally be selected to be the expected start position of the timeslot or, where appropriate, the expected start position of the portion of the timeslot that is being searched for, assuming that the timeslot is received at no delay relative to its intended or ideal position. Thus where the timeslot timing of the received signal is intended by its transmitting station to be synchronised to the timing of timeslots in the corresponding transmitted signal from the primary transceiver it is transmitting to, such as would be the case for a mobile radio system base station, the search start position (and thus captured received signal portion to search), will be selected on the assumption that the timing of the timeslots in the received signal transmitted by the remote transceiver will coincide with the timing of the timeslots in the primary transceiver's transmission to the remote transceiver that it is receiving the signal from. Thus in this case, where the start position of the search is intended to be the actual start position of the timeslot, the search start position would be selected to be at the timing position of the start or leading edge of the corresponding timeslot in the transmitted signal.

However, in a particularly preferred embodiment of the present invention, the start position of the timeslot search, i.e. where appropriate the timeslot search captured signal portion, is delayed relative to the position where it would be for a timeslot expected to be received with no delay by a predetermined time delay period (i.e. moved to a later timing position in the received signal determined by the predetermined time delay period). The transceiver thus effectively assumes that the start positions of timeslots in its received signal are delayed or offset by the predetermined time delay period relative to the start positions of timeslots in its corresponding transmitted signal.

This assumed predetermined time delay period or offset between transmission and reception effectively allows for a signal flight time round trip delay of that length, and thus automatically compensates for the reception delay caused by the signal flight to and from a remote station at a distance corresponding to a signal flight time equal to half the predetermined time delay period. In this way the range of the transceiver can be extended beyond that possible with the above earlier aspects of the invention alone. Thus the predetermined time delay period is preferably equal to twice the signal flight time for a signal to travel from the transceiver to a selected predetermined radius from the transceiver.

In these embodiments of the invention the search for the positions of the timeslots in the received signal is based on the positions of the timeslots in the signal transmitted by the transceiver. That search can be carried out, for example, as discussed above by analysing a captured portion of the received signal at each of a plurality of predetermined time delays or offsets relative to a selected start position in the captured signal portion to identify the timing offset that gives a particular result. However, in these embodiments of the invention, the start position of the search is determined on the basis that the expected start position (i.e. leading edge) of the timeslot, or, where appropriate, the expected start position of the portion of the timeslot, that is being searched for, is delayed by the predetermined amount relative to the corresponding position in the transmission timeslots.

In these embodiments of the invention, the transceiver is effectively arranged to turn its receiver on for a particular timeslot reception on a given carrier frequency only after a predetermined time delay period relative to the start position of its last transmission timeslot on its associated transmission frequency.

In these arrangements, where the primary transceiver is receiving signals from different remote transceivers on successive timeslots on the second carrier frequency, it will thus time its switching between reception from the different remote transceivers such that it switches between transceivers a predetermined time period after the start position of its last transmission timeslot.

In a particularly preferred arrangement, the primary transceiver assumes that the start timing position of each timeslot in its received signals is delayed relative to the start timing positions of the transmission timeslots by the predetermined amount, i.e. the leading edges of the received signal timeslots are delayed relative to the leading edges of the timeslots in the transmitted signal by the predetermined delay.

This arrangement provides a transceiver that can serve remote stations which are at least beyond the radius represented by half the predetermined time delay from the transceiver (since the transceiver cannot properly identify timeslots that arrive earlier than the timing position represented by that time delay). Thus the delay represents the minimum radius of operation that the transceiver can serve and it may then receive from remote stations beyond that minimum radius out to a maximum radius determined by the maximum timing offset permitted in the timeslot searching process (e.g. the guard band period or beyond that if the technique of the first two aspects of the present invention is employed).

This arrangement is particularly useful where it is not expected for there to be signals coming from closer than a minimum radius, but there will be signals from a greater distance. This could be the case, e.g., where there is a good geographical location for a radio base station (e.g. a mountain side) and there is at some distance a large urban or suburban area to be serviced. The advantage of being able to mount the aerial system at a great height with almost direct line of sight coverage may be greater than the disadvantage of the additional distance involved, especially if a higher gain directional aerial system is employed.

Where it is desired to also service the near zone to the transceiver, this could be accomplished by the transceiver or another transceiver operating another transmission and reception system, e.g. a pair of transmission and reception frequencies different to the longer range pair, at a different, predetermined start position time delay amount (e.g. zero time delay). Continuous coverage could then be obtained by handing over between the two transmission and reception carrier pairs. In a mobile radio communications system, such hand-over could be carried out in the normal cellular radio hand-over manner. Such handover is preferably based on the timing delay at which signals are received from the remote stations. For example, the distant station could be allocated to the zone whose range it falls within based on its signals' time delay and handed over to another zone when its time delay indicates that it has moved into another zone. The zones preferably overlap slightly to facilitate smoother handover.

In an alternative arrangement of this embodiment of the invention, the transceiver could be controlled to assume the predetermined time delay for the timeslot search start position of only selected received timeslots on a given carrier frequency, with some slots then being used for near reception and the 'delayed' timeslots for far reception, with the reception delay being dynamically allocated. This arrangement would require the reception timeslot immediately following a distant reception never to be used, and so reduces the system's transmission efficiency, but may be useful for low traffic density situations.

The present invention is applicable to all forms of timeslot divided data transmission and in particular where a first transceiver transmits to distant stations which then synchronise to those transmissions and then reply to the first transceiver at timeslot timing determined by the synchronisation, whether over wires, optical fibres or radio transmissions.

It is particularly applicable to extending the range over which base stations of mobile radio communication networks can operate. Thus the first or primary transceiver would typically be such a base station. However, it could also be, as discussed above, a mobile station that is effectively acting as a base station, such as the master mobile station in a TETRA direct mode net or a TETRA direct mode repeater or gateway. In all of these cases, the remote or distant transceivers or stations would typically comprise mobile stations of the mobile radio system.

The methods in accordance with the present invention may be implemented at least partially using software e.g. computer programs. It will thus be seen that when viewed from further aspects the present invention provides computer software specifically adapted to carry out the methods hereinabove described when installed on data processing means and a computer program element comprising computer software code portions for performing the methods hereinabove described when the program element is run on a computer. The invention also extends to a computer software carrier comprising such software which when used to operate a radio system comprising a digital computer causes in conjunction with said computer said system to carry out the steps of the method of the present invention. Such a computer software carrier could be a physical storage medium such as a ROM chip, CD ROM or disk, or could be a signal such as an electronic signal over wires, an optical signal or a radio signal such as to a satellite or the like.

It will further be appreciated that not all steps of the method of the invention need be carried out by computer software.

A number of preferred embodiments of the present invention will now be described by way of example only and with reference to the accompanying drawings, in which:
Figure 1 shows a normal TETRA uplink timeslot structure;
Figures 2a, 2b and 2c illustrate the delayed arrival of TETRA timeslots;
Figure 3 illustrates the situation where a predetermined delay is assumed between transmission and reception timeslots for a base station of a mobile radio communications system;
Figure 4 is a schematic illustration of an extended zone base station;
Figure 5 is a schematic illustration of a single base site with near and extended zones; and
Figure 6 is a schematic illustration of a base site with multiple extended zones.

The operation of the present invention will now be described with reference to the operation of a TETRA base station.

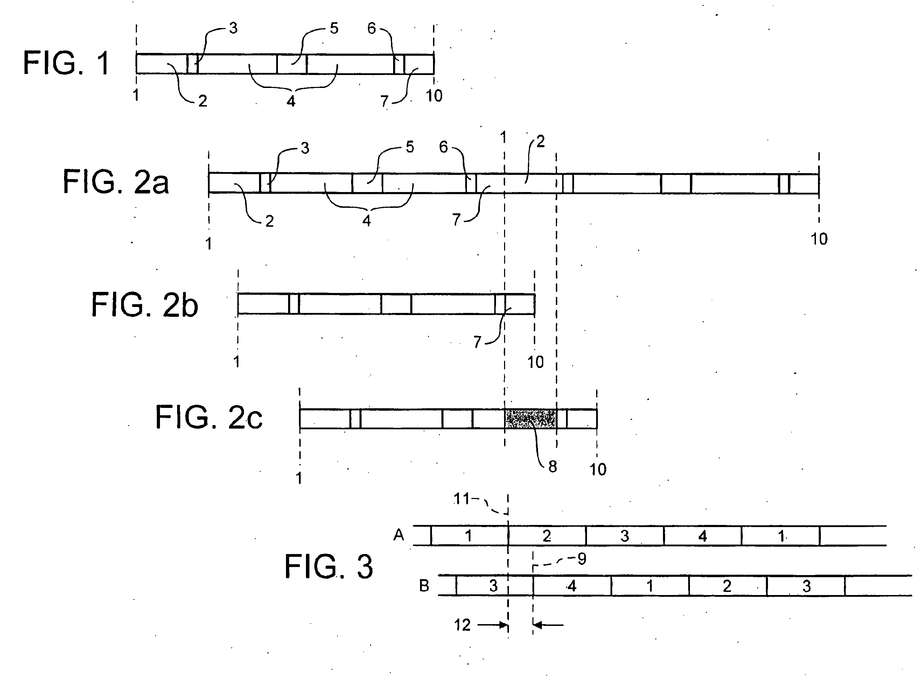

Figure 1 shows as an example, the normal uplink (i.e. for transmission from a mobile station to a base station) structure of a TETRA timeslot. The ends of the timeslot are denoted by the leading edge 1 at the start of the timeslot and the trailing edge 10 at the end of the timeslot. The timeslot includes an initial power amplifier ramping and linearisation period 2 which is set aside for mobile stations to use for those functions. There then follows a tail bits portion 3 (the tail bits are used to flush through filters but don't contain any useful data), followed by a data section 4 which contains the user data or traffic to be transmitted. Embedded in the centre of the timeslot separating the data section into two halves is a training sequence 5 portion which contains a predetermined signal portion or training sequence which can be used, *inter alia,* by a receiver to identify the timing position of the timeslot. The second user data section in the timeslot is then followed by a buffer period which contains no useful data comprising another tail bits portion 6 and finally a guard period 7 (which contains no data) before the trailing edge 10 of the timeslot.

In the normal course of communication a TETRA base station will transmit in the predetermined TETRA timeslots on a particular carrier frequency to one or more mobile stations. Those signals are received by the mobile stations but at a delay corresponding to the radio flight time out to the mobile station. The mobile station then attempts to synchronise to the delayed timeslot that it receives to set up its idea of the TETRA timeslot structure (which is therefore delayed compared to the base station's transmission timeslot timing) and transmits its reply to the base station using the timeslot structure that it has derived. This reply correspondingly will be delayed by the radio flight time from the mobile station when it is received by the base station. Thus the base station will receive the reply from the mobile station generally speaking delayed by twice the radio flight time delay for the trip out to the mobile station. This delay is variable, since it depends upon the distance of the mobile station from the base station.

To take account of this variable timing delay in replies.to a base station, in the TETRA system the base station radio receiver can search for the correct timing position of a received timeslot by looking for the training sequence embedded in the centre of the timeslot. This is normally done, as is known in the art, by comparing a reference training sequence with a selected portion of the received signal where it is expected for the training sequence to be. The search is normally carried out by correlating a reference training sequence with the selected signal portion at each of a set of predetermined time delays or offsets relative to the start of the selected signal portion. The offset giving the best correlation represents the actual timing position of the training sequence in the received timeslot.

As discussed above, the maximum possible offset is usually limited to be the value of the tail bits period and guard period at the end of the timeslot, i.e. the buffer period at the end of the timeslot containing no useful data, so as to avoid the risk of any overlap of useful data with the next received timeslot (which may be coming from a different mobile station and may therefore not have the delay of the present timeslot).

Figure 2a, 2b and 2c illustrate the delayed arrival of TETRA timeslots with timeslot edges 1, 10.

Figure 2a shows ideally positioned received timeslots with no radio flight time delay and thus corresponds to the timeslot timing positions of the base station's transmitted signal on the corresponding transmission frequency. Figure 2b shows the situation where a timeslot is received delayed by the full extent of the guard band.period 7. In this case the base station would still be able to satisfactorily receive the delayed timeslot, since there is no risk of the useful data in that a delayed timeslot overlapping with the next timeslot even if the next timeslot is received at no delay (its position in that case being represented by Figure 2a).

In a first embodiment of the present invention, the maximum permitted offset for the timeslot position search after the start position of that search is extended to be greater than the extent of the buffer, i.e. guard band and tail bits, period. This means that the base station can attempt to identify a timeslot that arrives so late that useful data in it could overlap with the next following timeslot. In this way, because the base station can receive timeslots with greater delays, the range of the base station is extended.

Figure 2c illustrates the reception of a timeslot from a more distant mobile station with such delay so as to.extend into the power amplifier linearisation period 2 of a following timeslot received without any delay (as represented by the timeslots shown in Figure 2a). The shaded area 8 shows the potential overlap of useful data in the late (longer range) timeslot with a timeslot received from a near mobile station that is without any timing delay and uses the whole of the power amplifying ramping and the linearisation period 2. As discussed, if the near mobile station is using its power amplifying ramping and linearisation period to the full extent, then data in the shaded portion could be lost. However, as discussed above, this may not always occur or in fact be too much of a problem.

To reduce the chances of such overlap occurring, as discussed above, the mobile stations of the system can be controlled not to use the full power amplifying ramping and linearisation period at the start of the timeslot, or the base station may only permit receptions in alternate timeslots, and/or the base station may process the received signals in two parts.

In a second preferred embodiment of the present invention, the base station controls its reception processing and in particular its searching for the position of received timeslots on the assumption that those timeslots will be delayed by a predetermined time period relative to its transmission timeslots. Figure 3 illustrates this arrangement and shows the position of the downlink transmission timeslots A relative to the uplink reception timeslots B. In other words, the base station in effect assumes that the starting or leading edges 9 of the timeslots on its reception frequency B are delayed by a predetermined time period 12 relative to the starting or leading edges 11 of the timeslots on its corresponding transmission frequency A.

This predetermined delay in effect compensates for a round trip radio flight time equal to the delay period. The base station can thus receive a transmission from a mobile station at a distance corresponding to a round trip radio flight time delay at least equal to the predetermined, assumed, timeslot position delay. The base station can thereby receive from mobile stations at that minimum distance (i.e. radius) out to a distance (radius) determined by the TETRA guard band period or further if the extended maximum search offset arrangement of the first embodiment is employed.

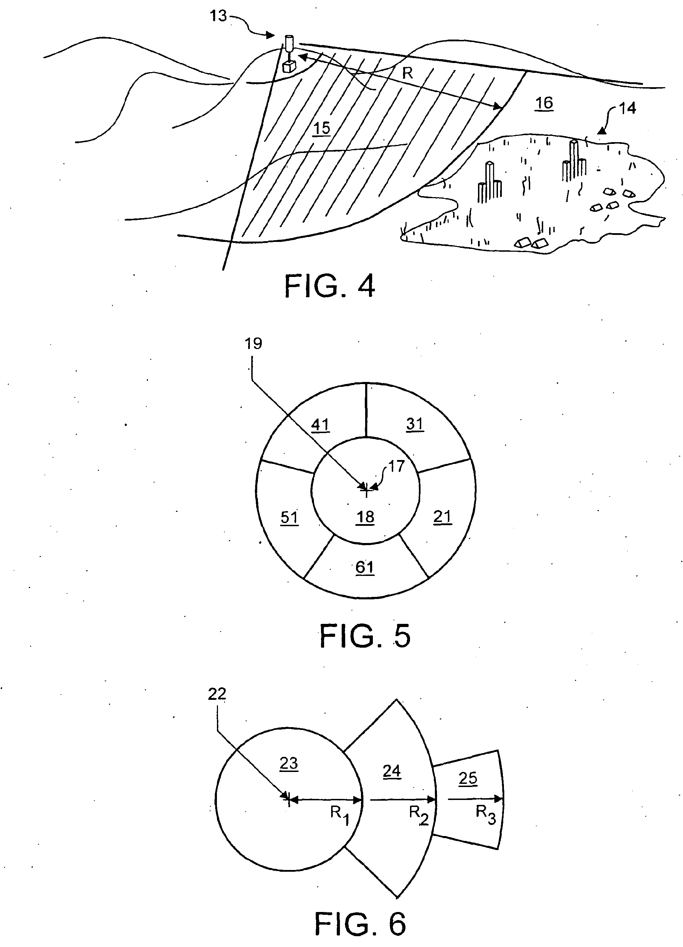

A base station operating with this arrangement will not allow mobile stations whose timeslots arrive earlier than the minimum radius to use it, since it cannot receive any of these early timeslots. This may not be a difficulty where there is a good geographical location for a base site (e.g. a mountain side) and there is at some distance of urban or suburban area to be serviced. Figure 4 illustrates such situation using an extended zone base station site 13 wherein a high gain directional aerial is mounted on a mountain side, and there is an urban or suburban area 14 where service is required at beyond a minimum radius R from the base site 13. In this case, the predetermined time delay assumed by the base station would correspond to twice the flight time for a radio signal out to the distance R. The zone defined by the area at a distance less than the radius R from the base station 13 where no coverage is required forms a "dead zone" 15. The urban or suburban area 14 is covered by the extended zone 16.

If there is a need to fill in the near zone to the base site, this can be accomplished, for example, by another base station on the site which operates at a different frequency from the extended zone. The minimum radius of the extended zone should then be set to be equal to the maximum radius of the near zone, or perhaps slightly less than the radius to allow for some, e.g. predetermined, overlap between the zones (i.e. predetermined time delays) to facilitate handover between the zones, and so on, if further extended zones are provided. Continuous coverage can then be obtained by handing over between the two base stations in the same way as handover is done between different base sites. Handover between the zones could, for example, be based on the radio signal time delay, such that, e.g., handover occurs when the actual time delay of a received signal (which can, e.g. be calculated from the derived timing position of the received timeslots relative to the transmission timeslots) falls into the overlap period, instead or as well as being based on other known, handover parameters, such as signal quality measurements. Figure 5 illustrates such an arrangement where there is a base site provides coverage of near and extended zones. In this arrangement there is a base station 17 provided at the multiple base station site 19 for serving a near zone 18 on a first frequency and five extended zone base stations provided at the multiple base station site 19 for serving five extended zones 21, 31, 41, 51, 61, each using different frequencies and employing high gain sector aerials.

Alternatively, as discussed above, a single base station transmission and reception frequency pair could be used to serve both near and far zones if one timeslot is used for the near zone and other timeslots are used for the far zone with the reception delay being dynamically allocated.

Figure 6 illustrates a further arrangement where base stations provided at a multiple base station site 22 are arranged to provide a near zone 23, and first 24 and second 25 extended zones. The near zone 23 operates out to a maximum radius R₁, which may, e.g. be 150 km. The first extended zone 24 will have its minimum radius (set by its predetermined reception time delay) set to R₁ and operate out to a maximum radius set by, e.g., the maximum timing offset used for the zone 24, e.g. around 300 km. The minimum radius (i.e. predetermined time delay) of the second extended zone 25 should then be set to be equal to the maximum radius R₂ of the first extended zone 24,and its maximum radius R₃ set as desired, e.g. around 450 km. In practice, the minimum radius of the next zone is preferably set to be slightly less than the maximum radius of the previous zone to allow some, e.g. predetermined, overlap between the zones (i.e. predetermined time delays) to facilitate handover. Handover between zones could then, as discussed above, be based on the radio signal time delay, such that, e.g., handover occurs when the actual time delay of a received signal falls into the overlap period.

As can be appreciated from the above, the invention provides ways of extending both the range between the minimum and maximum ranges that a base station of a TDMA mobile radio communication system can serve and also the overall maximum range that it can serve. Furthermore, it does this in a manner that only requires changes to the operation of the base station. Thus the mobile stations can simply operate normally and there is no need for any controlling signalling to the mobile stations to cause them to operate in a different manner when they are further from the base station.

Although the present invention has been described with reference to the TETRA system, it is, as will be appreciated by those skilled in the art, applicable to any TDMA mobile radio communications system, such as the GSM system, or D_AMPS system ("Digital American Mobile Phone System", now termed IS54 (Interim Standard 54)), or indeed TDMA or timeslot divided transmission/reception systems over cable or any other transmission medium.

## Claims

1. A method of operating a receiver of a time division multiple access communications system, which receiver (13) can in use receive signals from different other transceivers of the system on successive timeslots and in which system each transmitted timeslot includes at its end a predetermined buffer period (6, 7) in which no useful data is transmitted, the method comprising:
the receiver (13) identifying the timing position of the timeslots in a received signal by analysing a selected captured portion (5) of the received signal at each of a set of predetermined timing offsets with respect to a selected start relative timing position in the captured portion of the received signal, and **characterised in that**;
the maximum timing offset in the set of predetermined timing offsets is greater than the predetermined buffer period (6, 7) in which no useful data is transmitted.

2. The method of claim 1, wherein said different other transceivers are controlled not to transmit during a predetermined time period at the start of each transmission timeslot.

3. The method of claim 2, wherein said predetermined time period at the start of each transmission timeslot is the power amplifier ramping and linearisation period (2) for said transceivers or at least the first part thereof.

4. The method of claim 2 or 3, wherein the maximum timing offset in the set is less than or equal to the sum of the predetermined buffer period (6, 7) and the predetermined time period at the start of each transmission timeslot during which the other transceivers are controlled not to transmit.

5. A method of operating a time division multiple access communication system in which a first transceiver (13) transmits to one or more remote transceivers of the system and receives signals therefrom, and in which system each transmitted timeslot includes at its end a predetermined buffer period (6, 7) in which no useful data is transmitted, the method comprising:
controlling the remote transceivers not to transmit during a predetermined time period at the start of each transmission timeslot; and
the first transceiver (13) identifying the timing position of the timeslots in a received signal from one of the remote transceivers by analysing a selected captured portion (5) of the received signal at each of a set of predetermined timing offsets with respect to a selected start relative timing position in the captured portion of the received signal; wherein
the maximum timing offset in the set of predetermined timing offsets is greater than the predetermined buffer period (6, 7) at the end of each timeslot but less than or equal to the sum of the predetermined buffer period and the predetermined time period at the start of each transmission timeslot during which the remote transceivers are controlled not to transmit.

6. The method of claim 1, wherein said different other receivers are controlled to transmit only in alternate timeslots.

7. A method of operating a time division multiple access communications system in which a first transceiver (13) transmits signals to other transceivers of the system and receives signals therefrom, and in which system each transmitted timeslot includes at its end a predetermined buffer period (6, 7) in which no useful data is transmitted, the method comprising:
the first transceiver (13) controlling the sending of signals to it by the other transceivers of the system such that it only receives signals from the other transceivers in alternate timeslots on a given carrier frequency; and
the first transceiver (13) identifying the timing position of the timeslots in a received signal by analysing a selected captured portion (5) of the received signal at each of a set of predetermined timing offsets with respect to a selected start relative timing position in the captured portion of the received signal;
wherein the maximum timing offset in the set of predetermined timing offsets is greater than the predetermined buffer period (6, 7) in which no useful data is transmitted at the end of each timeslot but less than or equal to the sum of the predetermined buffer period and the duration of a timeslot.

8. The method of any one of the preceding claims, further comprising the receiver dividing an identified received timeslot into two separate parts, the first part comprising a first portion of the timeslot, and the second part containing the remaining data in the timeslot;
the receiver then deriving signal processing information for processing the timeslot from the first part of the timeslot; and
the receiver then using the data derived from the first part of the timeslot to process the first and second parts of the timeslot.

9. A method of operating a receiver as claimed in claim 8, wherein the first and second parts of said timeslot are processed together.

10. A method of operating a receiver as claimed in claim 8, wherein each part of said timeslot is processed separately.

11. The method of claim 8, 9, or 10, wherein the first part of the timeslot comprises the data in the received timeslot up to a relative timing position in the received timeslot which is not greater than a timing position corresponding to the position that would have been the end of the timeslot had it been received without any delay relative to the transceiver's transmission timeslots, and the second part of the timeslot is the remaining portion of the timeslot after the first part.

12. The method of any one of the preceding claims, wherein once the timing position of a received timeslot from a particular transceiver is identified, the size of the selected captured portion of the received signal over which the timing position analysis is carried out is reduced to a smaller predetermined size from its initial size, which smaller size is then used when determining the timing position of all subsequent timeslots during that particular reception.

13. The method of any one of the preceding claims wherein the start relative timing position for said timeslot timing position analysis is selected to be a predetermined time delay period after the start timing position that would be selected for a timeslot expected to be received with no delay.

14. The method of any one of the preceding claims, wherein the start relative timing position for said timeslot timing position analysis is selected to be a predetermined time delay period after the start position of the receiver's last transmission timeslot on the associated transmission frequency.

15. The method of claim 14, wherein when the transceiver is receiving signals from different remote transceivers on successive timeslots, it switches between reception from the different remote transceivers after the predetermined time period has elapsed from the start position of its last transmission timeslot.

16. The method of claim 14 or 15, wherein the transceiver (13) selects the start relative timing position for said timeslot timing position analysis on the assumption that the start timing position of each timeslot in its received signals is delayed relative to the start timing positions of its transmission timeslots by the predetermined time delay period.

17. The method of any one of claims 14 to 16, wherein the predetermined time delay period is set equal to twice the signal flight time for a signal to travel from the receiver to a predetermined radius (R₁; R₂) from the receiver (22).

18. The method of any one of claims 14 to 17, wherein said predetermined time delay for the timeslot search start position is used for the reception of only selected received timeslots on a given carrier frequency.

19. The method of any one of claims 14 to 18, wherein said receiver operates a second pair of transmission and reception carrier frequencies for which the relative start timing position in the received signal used in the timeslot timing position analysis is delayed by a different predetermined amount.

20. The method of claim 19, wherein handover between the two transmission and reception carrier frequency pairs is based on the timing delay at which signals are received from remote transceivers.

21. The method of any one of the preceding claims, wherein the primary transceiver is a base station (13; 17, 19; 22) of a mobile radio communications system.

22. The method of any one of claims 1 to 21, wherein the primary transceiver is a mobile station of a mobile radio communications system.

23. The method of any one of the preceding claims, wherein the other transceivers comprise mobile stations of a mobile radio communications system.

24. A receiver for a time division multiple access communications system, which receiver can in use receiver signals from different other transceivers of the system on successive timeslots and in which system each transmitted timeslot includes at its end a predetermined buffer period (6, 7) in which no useful data is transmitted, the receiver (13) comprising:
means for identifying the timing position of the timeslots in a received signal by analysing a selected captured portion (5) of the received signal at each of a set of predetermined timing offsets with respect to a selected start relative timing position in the captured portion of the received signal;
wherein the maximum timing offset in the set of predetermined timing offsets is greater than the predetermined buffer period (6, 7) in which no useful data is transmitted.

25. A transceiver for a time division multiple access communication system which transceiver (13) transmits to one or more remote transceivers of the system and receives signals therefrom, and in which system each transmitted timeslot includes at its end a predetermined buffer period (6, 7) in which no useful data is transmitted, the transceiver comprising:
means for identifying the timing position of the timeslots in a received signal from one of the remote transceivers by analysing a selected captured portion (5) of the received signal at each of a set of predetermined timing offsets with respect to a selected start relative timing position in the captured portion of the received signal; and
means for controlling the remote transceivers not to transmit during a predetermined time period at the start of each transmission timeslot; wherein
the maximum timing offset in the set of predetermined timing offsets is greater than the predetermined buffer period (6, 7) at the end of each timeslot but less than or equal to the sum of the predetermined buffer period and the predetermined time period at the start of each transmission timeslot during which the remote transceivers are controlled not to transmit.

26. A transceiver for a time division multiple access communications system, which transceiver transmits signals to other transceivers of the system and receives signals therefrom, and in which system each transmitted timeslot includes at its end a predetermined buffer period (6, 7) in which no useful data is transmitted, the transceiver (13) comprising:
means for controlling the sending of signals to it by the other transceivers of the system such that it only receives signals from the other transceivers in alternate timeslots on a given carrier frequency; and
means for identifying the timing position of the timeslots in a received signal by analysing a selected captured portion (5) of the received signal at each of a set of predetermined timing offsets with respect to a selected start relative timing position in the captured portion of the received signal;
wherein the maximum timing offset in the set of predetermined timing offsets is greater than the predetermined buffer period (6, 7) in which no useful data is transmitted at the end of each timeslot but less than or equal to the sum of the predetermined buffer period and the duration of a timeslot.

27. The receiver or transceiver of any one of claims 24 to 26, further comprising: means for dividing an identified received timeslot into two separate parts, the first part comprising a first portion of the timeslot, and the second part containing the remaining data in the timeslot;
means for then deriving signal processing information for processing the timeslot from the first part of the timeslot; and
means for then using the data derived from the first part of the timeslot to process the first and second parts of the timeslot.

28. The receiver or transceiver of any one of claims 24 to 27, comprising means for selecting the start relative timing position for said timeslot timing position analysis to be a predetermined time delay period after the start timing position that would be selected for a timeslot expected to be received with no delay.

29. The receiver or transceiver of any one of claims 24 to 28, comprising means for selecting the start relative timing position for said timeslot timing position analysis to be a predetermined time delay period after the start position of the receiver's last transmission timeslot on the associated transmission frequency.

30. A base station of a mobile radio communications system comprising a receiver or transceiver as claimed in any one of claims 24 to 29.

31. A mobile station of a mobile radio communications system comprising a receiver or transceiver as claimed in any one of claims 24 to 29.

32. Computer software specifically adapted to carry out the method of any one of claims 1 to 23 when installed on a data processing means.

## Patentansprüche

1. Verfahren zum Betreiben eines Empfängers eines Zeitvielfachzugriff-Kommunikationssystems, wobei der Empfänger (13) im Gebrauch Signale von verschiedenen anderen Sendeempfängern des Systems auf aufeinanderfolgenden Zeitschlitzen empfangen kann und in welchem System jeder übertragene Zeitschlitz an seinem Ende eine vorbestimmte Schutzzeit (6, 7) enthält, in der keine Nutzdaten übertragen werden, wobei das Verfahren Folgendes umfasst:
Identifizieren durch den Empfänger (13) der Taktlage der Zeitschlitze in einem empfangenen Signal durch Auswerten eines ausgewählten erfassten Teils (5) des empfangenen Signals an jedem einer Menge vorbestimmter Taktoffsets hinsichtlich einer ausgewählten Start-Relativtaktlage in dem erfassten Teil des empfangenen Signals, und **dadurch gekennzeichnet, dass**:
der maximale Taktoffset in der Menge vorbestimmter Taktoffsets größer ist als die vorbestimmte Schutzzeit (6, 7), in der keine Nutzdaten übertragen werden.

2. Verfahren nach Anspruch 1, wobei diese verschiedenen anderen Sendeempfänger angesteuert werden, während einer vorbestimmten Zeitdauer zu Beginn jedes Übertragungszeitschlitzes nicht zu übertragen.

3. Verfahren nach Anspruch 2, wobei diese vorbestimmte Zeitdauer zu Beginn jedes Übertragungszeitschlitzes die Leistungsverstärker-Hochlauf- und Linearisierungsdauer , (2) für diese Sendeempfänger oder mindestens der erste Teil derselben ist.

4. Verfahren nach Anspruch 2 oder 3, wobei der maximale Taktoffset in der Menge weniger gleich der Summe der vorbestimmten Schutzzeit (6, 7) und der vorbestimmten Zeitdauer zu Beginn jedes Übertragungszeitschlitzes, während der die anderen Sendeempfänger angesteuert werden, nicht zu übertragen, ist.

5. Verfahren zum Betreiben eines Zeitvielfachzugriff-Kommunikationssystems, in dem ein erster Sendeempfänger (13) zu einem oder mehreren entfernten Sendeempfängern des Systems überträgt und von diesem Signale empfängt, und in welchem System jeder übertragene Zeitschlitz an seinem Ende eine vorbestimmte Schutzzeit (6, 7) enthält, in der keine Nutzdaten übertragen werden, wobei das Verfahren Folgendes umfasst:
Ansteuern der entfernten Sendeempfänger, während einer vorbestimmten Zeitdauer zu Beginn jedes Übertragungszeitschlitzes nicht zu übertragen; und
Identifizieren durch den ersten Sendeempfänger (13) der Taktlage der Zeitschlitze in einem empfangenen Signal von einem der entfernten Sendeempfänger durch Auswerten eines ausgewählten erfassten Teils (5) des empfangenen Signals an jedem einer Menge vorbestimmter Taktoffsets hinsichtlich einer ausgewählten Start-Relativtaktlage in dem erfassten Teil des empfangenen Signals; wobei
der maximale Taktoffset in der Menge vorbestimmter Taktoffsets größer als die vorbestimmte Schutzzeit (6, 7) am Ende jedes Zeitschlitzes, aber weniger gleich der Summe der vorbestimmten Schutzzeit und der vorbestimmten Zeitdauer zu Beginn jedes Übertragungszeitschlitzes ist, während der die entfernten Sendeempfänger angesteuert werden, nicht zu übertragen.

6. Verfahren nach Anspruch 1, wobei die verschiedenen anderen Empfänger angesteuert werden, nur in abwechselnden Zeitschlitzen zu übertragen.

7. Verfahren zum Betreiben eines Zeitvielfachzugriff-Kommunikationssystems, in dem ein erster Sendeempfänger (13) Signale zu anderen Sendeempfängern des Systems überträgt und Signale von diesen empfängt, und in welchem System jeder übertragene Zeitschlitz an seinem Ende eine vorbestimmte Schutzzeit (6, 7) enthält, in der keine Nutzdaten übertragen werden, wobei das Verfahren Folgendes umfasst:
Steuern durch den ersten Sendeempfänger (13) des Sendens von Signalen zu ihm durch die anderen Sendeempfänger des Systems, so dass er nur Signale von den anderen Sendeempfängern in abwechselnden Zeitschlitzen auf einer gegebenen Trägerfrequenz empfängt; und
Identifizieren durch den ersten Sendeempfänger (13) der Taktlage der Zeitschlitze in einem empfangenen Signal durch Auswerten eines ausgewählten erfassten Teils (5) des empfangenen Signals an jedem einer Menge vorbestimmter Taktoffsets hinsichtlich einer ausgewählten Start-Relativtaktlage in dem erfassten Teil des empfangenen Signals;
wobei der maximale Taktoffset in der Menge vorbestimmter Taktoffsets größer als die vorbestimmte Schutzzeit (6, 7) ist, in der keine Nutzdaten am Ende jedes Zeitschlitzes übertragen werden, aber weniger gleich der Summe der vorbestimmten Schutzzeit und der Dauer eines Zeitschlitzes ist.

8. Verfahren nach einem beliebigen der vorhergehenden Ansprüche, weiterhin umfassend Teilen durch den Empfänger eines identifizierten empfangenen Zeitschlitzes in zwei getrennte Teile, wobei der erste Teil einen ersten Teil des Zeitschlitzes umfasst und der zweite Teil die übrigen Daten im Zeitschlitz enthält;
Ableiten nachfolgendes durch den Empfänger von Signalverarbeitungsinformationen zum Verarbeiten des Zeitschlitzes aus dem ersten Teil des Zeitschlitzes; und
nachfolgendes Benutzen durch den Empfänger der aus dem ersten Teil des Zeitschlitzes abgeleiteten Daten zum Verarbeiten der ersten und zweiten Teile des Zeitschlitzes.

9. Verfahren zum Betreiben eines Empfängers nach Anspruch 8, wobei die ersten und zweiten Teile dieses Zeitschlitzes zusammen verarbeitet werden.

10. Verfahren zum Betreiben eines Empfängers nach Anspruch 8, wobei jeder Teil dieses Zeitschlitzes getrennt verarbeitet wird.

11. Verfahren nach Anspruch 8, 9 oder 10, wobei der erste Teil des Zeitschlitzes die Daten in dem empfangenen Zeitschlitz bis zu einer Relativtaktlage in dem empfangenen Zeitschlitz umfasst, die nicht größer als eine Taktlage ist, die der Lage entspricht, die das Ende des Zeitschlitzes gewesen wäre, wenn er ohne jede Verzögerung bezüglich der Übertragungszeitschlitze des Sendeempfängers empfangen worden wäre, und der zweite Teil des Zeitschlitzes der übrige Teil des Zeitschlitzes nach dem ersten Teil ist.

12. Verfahren nach einem beliebigen der vorhergehenden Ansprüche, wobei, sobald die Taktlage eines empfangenen Zeitschlitzes von einem bestimmten Sendeempfänger identifiziert ist, die Größe des ausgewählten erfassten Teils des empfangenen Signals, über den die Taktlagenauswertung ausgeführt wird, auf eine kleinere vorbestimmte Größe von seiner Anfangsgröße verringert wird, wobei die kleinere Größe dann beim Bestimmen der Taktlage aller nachfolgenden Zeitschlitze während dieses bestimmten Empfangs benutzt wird.

13. Verfahren nach einem beliebigen der vorhergehenden Ansprüche, wobei die Start-Relativtaktlage für diese Zeitschlitz-Taktlagenauswertung als eine vorbestimmte Laufzeitdauer nach der Start-Taktlage ausgewählt wird, die für einen Zeitschlitz ausgewählt werden würde, von dem ein Empfang ohne Verzögerung erwartet wird.

14. Verfahren nach einem beliebigen der vorhergehenden Ansprüche, wobei die Start-Relativtaktlage für diese Zeitschlitz-Taktlagenauswertung als eine vorbestimmte Laufzeitdauer nach der Startlage des letzten Übertragungszeitschlitzes des Empfängers auf der zugehörigen Übertragungsfrequenz ausgewählt wird.

15. Verfahren nach Anspruch 14, wobei bei Empfang von Signalen von verschiedenen entfernten Sendeempfängern auf aufeinanderfolgenden Zeitschlitzen durch den Sendeempfänger dieser zwischen Empfang von den verschiedenen entfernten Sendeempfängern umschaltet, nachdem die vorbestimmte Zeitdauer nach der Startlage seines letzten Übertragungszeitschlitzes abgelaufen ist.

16. Verfahren nach Anspruch 14 oder 15, wobei der Sendeempfänger (13) die Start-Relativtaktlage für die Zeitschlitztaktlagenauswertung mit der Annahme auswählt, dass die Start-Taktlage jedes Zeitschlitzes in seinen empfangenen Signalen relativ zu den Start-Taktlagen seiner Übertragungszeitschlitze um die vorbestimmte Laufzeitdauer verzögert ist.

17. Verfahren nach einem beliebigen der Ansprüche 14 bis 16, wobei die vorbestimmte Laufzeitdauer als gleich der doppelten Signallaufzeit für ein Signal eingestellt wird, damit es vom Empfänger zu einem vorbestimmten Radius (R₁; R₂) vom Empfänger (22) aus läuft.

18. Verfahren nach einem beliebigen der Ansprüche 14 bis 17, wobei die vorbestimmte Laufzeit für die Zeitschlitzsuchstartlage zum Empfang von nur ausgewählten empfangenen Zeitschlitzen auf einer gegebenen Trägerfrequenz benutzt wird.

19. Verfahren nach einem beliebigen der Ansprüche 14 bis 18, wobei dieser Empfänger ein zweites Paar Sende- und Empfangsträgerfrequenzen betreibt, für die die relative Start-Taktlage in dem in der Zeitschlitztaktlagenauswertung benutzten empfangenen Signal um einen unterschiedlichen vorbestimmten Betrag verzögert wird.

20. Verfahren nach Anspruch 19, wobei das Handover zwischen den zwei Sende- und Empfangsträgerfrequenzpaaren auf der Taktlaufzeit basiert, mit der Signale von entfernten Sendeempfängern empfangen werden.

21. Verfahren nach einem beliebigen der vorhergehenden Ansprüche, wobei der primäre Sendeempfänger eine Feststation (13; 17, 19; 22) eines Mobilfunkkommunikationssystems ist.

22. Verfahren nach einem beliebigen der Ansprüche 1 bis 21, wobei der primäre Sendeempfänger eine Mobilstation eines Mobilfunkkommunikationssystems ist.

23. Verfahren nach einem beliebigen der vorhergehenden Ansprüche, wobei die anderen Sendeempfänger Mobilstationen eines Mobilfunkkommunikationssystems umfassen.

24. Empfänger für ein Zeitvielfachzugriffs-Kommunikationssystem, der in Gebrauch Signale von verschiedenen anderen Sendeempfängern des Systems auf aufeinanderfolgenden Zeitschlitzen empfangen kann und in welchem System jeder übertragene Zeitschlitz an seinem Ende eine vorbestimmte Schutzzeit (6, 7) enthält, in der keine Nutzdaten übertragen werden, wobei der Empfänger (13) Folgendes umfasst:
Mittel zum Identifizieren der Taktlage der Zeitschlitze in einem empfangenen Signal durch Auswerten eines ausgewählten erfassten Teils (5) des empfangenen Signals an jedem einer Menge vorbestimmter Taktoffsets hinsichtlich einer ausgewählten Start-Relativtaktlage in dem erfassten Teil des empfangenen Signals;
wobei der maximale Taktoffset in der Menge vorbestimmter Taktoffsets größer als die vorbestimmte Schutzzeit (6, 7), in der keine Nutzdaten übertragen werden, ist.

25. Sendeempfänger für ein Zeitvielfachzugriffs-Kommunikationssystem, wobei der Sendeempfänger (13) zu einem oder mehreren entfernten Sendeempfängern des Systems überträgt und Signale von diesen empfängt, und in welchem System jeder übertragene Zeitschlitz an seinem Ende eine vorbestimmte Schutzzeit (6, 7) enthält, in der keine Nutzdaten übertragen werden, wobei der Sendeempfänger Folgendes umfasst:
Mittel zum Identifizieren der Taktlage der Zeitschlitze in einem empfangenen Signal von einem der entfernten Sendeempfänger durch Auswerten eines ausgewählten erfassten Teils (5) des empfangenen Signals an jedem einer Menge von vorbestimmten Taktoffsets hinsichtlich einer ausgewählten Start-Relativtaktlage in dem erfassten Teil des empfangenen Signals; und
Mittel zum Ansteuern der entferntes Sendeempfänger, während einer vorbestimmten Zeitdauer zu Beginn jedes Übertragungszeitschlitzes nicht zu übertragen; wobei
der maximale Taktoffset in der Menge vorbestimmter Taktoffsets größer als die vorbestimmte Schutzzeit (6, 7) am Ende jedes Zeitschlitzes, aber weniger gleich der Summe der vorbestimmten Schutzzeit und der vorbestimmten Zeitdauer zu Beginn jedes Übertragungszeitschlitzes ist, während der die entfernten Sendeempfänger angesteuert werden, nicht zu übertragen.

26. Sendeempfänger für ein Zeitvielfachzugriffs-Kommunikationssystem, der Signale zu anderen Sendeempfängern des Systems überträgt und Signale von diesen empfängt, und in welchem System jeder übertragene Zeitschlitz an seinem Ende eine vorbestimmte Schutzzeit (6, 7) enthält, in der keine Nutzdaten übertragen werden, wobei der Sendeempfänger (13) Folgendes umfasst:
Mittel zum Steuern des Sendens von Signalen zu ihm durch die anderen Sendeempfänger des Systems, so dass er nur Signale von den anderen Sendeempfängern in abwechselnden Zeitschlitzen auf einer gegebenen Trägerfrequenz empfängt; und
Mittel zum Identifizieren der Taktlage der Zeitschlitze in einem empfangenen Signal durch Auswerten eines ausgewählten erfassten Teils (5) des empfangenen Signals an jedem einer Menge vorbestimmter Taktoffsets hinsichtlich einer ausgewählten Start-Relativtaktlage in dem erfassten Teil des empfangenen Signals;
wobei der maximale Taktoffset in der Menge vorbestimmter Taktoffsets größer als die vorbestimmte Schutzzeit (6, 7), in der am Ende jedes Zeitschlitzes keine Nutzdaten übertragen werden, aber weniger gleich der Summe der vorbestimmten Schutzzeit und der Dauer eines Zeitschlitzes ist.

27. Empfänger oder Sendeempfänger nach einem beliebigen der Ansprüche 24 bis 26, weiterhin umfassend: Mittel zum Teilen eines identifizierten empfangenen Zeitschlitzes in zwei getrennte Teile, wobei der erste Teil einen ersten Teil des Zeitschlitzes umfasst und der zweite Teil die übrigen Daten im Zeitschlitz enthält;
Mittel zum nachfolgenden Ableiten von Signalverarbeitungsinformationen zum Verarbeiten des Zeitschlitzes aus dem ersten Teil des Zeitschlitzes; und
Mittel zum nachfolgenden Benutzen der aus dem ersten Teil des Zeitschlitzes abgeleiteten Daten zum Verarbeiten des ersten und zweiten Teils des Zeitschlitzes.

28. Empfänger oder Sendeempfänger nach einem beliebigen der Ansprüche 24 bis 27, umfassend Mittel zum Auswählen der Start-Relativtaktlage für die Zeitschlitz-Taktlagenauswertung als vorbestimmte Laufzeitdauer nach der Start-Taktlage, die für einen Zeitschlitz ausgewählt werden würde, von dem ein Empfang ohne Verzögerung erwartet wird.

29. Empfänger oder Sendeempfänger nach einem beliebigen der Ansprüche 24 bis 28, umfassend Mittel zum Auswählen der Start-Relativtaktlage für diese Zeitschlitztaktlagenauswertung als eine vorbestimmte Laufzeitdauer nach der Startlage des letzten Übertragungszeitschlitzes des Empfängers auf der zugehörigen Übertragungsfrequenz.

30. Feststation eines Mobilfunkkommunikationssystems, umfassend einen Empfänger oder Sendeempfänger nach einem beliebigen der Ansprüche 24 bis 29.

31. Mobilstation eines Mobilfunkkommunikationssystems, umfassend einen Empfänger oder Sendeempfänger nach einem beliebigen der Ansprüche 24 bis 29.

32. Computersoftware, die spezifisch zum Ausführen des Verfahrens nach einem beliebigen der Ansprüche 1 bis 23 eingerichtet ist, wenn sie auf einem Datenverarbeitungsmittel installiert ist.

## Revendications

1. Procédé de mise en fonctionnement d'un récepteur d'un système de communication à accès multiples par répartition temporelle, lequel récepteur (13) peut, lors de l'utilisation, recevoir des signaux de différents autres émetteurs/récepteurs du système sur des créneaux temporels successifs et système dans lequel chaque créneau temporel émis comporte à son extrémité une période tampon prédéterminée (6, 7) dans laquelle aucune donnée utile n'est émise, le procédé consistant à :
faire en sorte que le récepteur (13) identifie la position temporelle des créneaux temporels dans un signal reçu en analysant une portion acquise sélectionnée (5) du signal reçu en chacun d'un ensemble de décalages temporels prédéterminés par rapport à une position temporelle relative de départ sélectionnée dans la portion acquise du signal reçu, et **caractérisé en ce que** :
le décalage temporel maximum dans l'ensemble de décalages temporels prédéterminés est supérieur à la période tampon prédéterminée (6, 7) dans laquelle aucune donnée utile n'est émise.

2. Procédé selon la revendication 1, dans lequel lesdits différents autres émetteurs/récepteurs sont commandés de façon à ne pas émettre pendant une période de temps prédéterminée au début de chaque créneau temporel d'émission.

3. Procédé selon la revendication 2, dans lequel ladite période de temps prédéterminée au début de chaque créneau temporel d'émission est la période de montée en puissance et de linéarisation de l'amplificateur de puissance (2) pour lesdits émetteurs/récepteurs ou du moins la première partie de ceux-ci.

4. Procédé selon la revendication 2 ou 3, dans lequel le décalage temporel maximum dans l'ensemble est inférieur ou égal à la somme de la période tampon prédéterminée (6, 7) et de la période temporelle prédéterminée au début de chaque créneau temporel d'émission pendant lequel les autres émetteurs/récepteurs sont commandés pour ne pas émettre.

5. Procédé de mise en fonctionnement d'un système de communication à accès multiples par répartition temporelle dans lequel un premier émetteur/récepteur (13) émet vers un ou plusieurs émetteurs/récepteurs distants du système et en reçoit des signaux, et système dans lequel chaque créneau temporel émis comporte à son extrémité une période tampon prédéterminée (6, 7) dans laquelle aucune donnée utile n'est émise, le procédé consistant à :
commander les émetteurs/récepteurs distants de façon qu'ils n'émettent pas pendant une période de temps prédéterminée au début de chaque créneau temporel d'émission ; et
faire en sorte que le premier émetteur/récepteur (13) identifie la position temporelle des créneaux temporels dans un signal reçu de l'un des émetteurs/récepteurs distants en analysant une portion acquise sélectionnée (5) du signal reçu pour chacun d'un ensemble de décalages temporels prédéterminés par rapport à une position temporelle relative de départ sélectionnée dans la partie acquise du signal reçu ; dans lequel
le décalage temporel maximum dans l'ensemble de décalages temporels prédéterminés est supérieur à la période tampon prédéterminée (6, 7) à la fin de chaque créneau temporel mais inférieure ou égale à la somme de la période tampon prédéterminée et de la période de temps prédéterminée au début de chaque créneau temporel d'émission pendant lequel les émetteurs/récepteurs distants sont commandés pour ne pas émettre.

6. Procédé selon la revendication 1, dans lequel lesdits différents autres récepteurs sont commandés pour n'émettre que dans des créneaux temporels alternés.

7. Procédé de mise en fonctionnement d'un système de communication à accès multiples par répartition temporelle dans lequel un premier émetteur/récepteur (13) émet des signaux vers d'autres émetteurs/récepteurs du système et en reçoit des signaux, et système dans lequel chaque créneau temporel émis comporte à son extrémité une période tampon prédéterminée (6, 7) dans laquelle aucune donnée utile n'est émise, le procédé consistant à :
faire en sorte que le premier émetteur/récepteur (13) commande l'envoi de signaux vers lui par les autres émetteurs/récepteurs du système de façon qu'il ne reçoive que les signaux provenant des autres émetteurs/récepteurs dans des créneaux temporels alternés sur une fréquence porteuse donnée ; et
faire en sorte que le premier émetteur/récepteur (13) identifie la position temporelle des créneaux temporels dans un signal reçu en analysant une portion acquise sélectionnée (5) du signal reçu pour chacun d'un ensemble de décalages temporels prédéterminés par rapport à une position temporelle relative de départ sélectionnée dans la portion acquise du signal reçu ;
dans lequel le décalage temporel maximum dans l'ensemble de décalages temporels prédéterminés est supérieur à la période tampon prédéterminée (6, 7) dans laquelle aucune donnée utile n'est émise à la fin de chaque créneau temporel mais inférieure ou égale à la somme de la période tampon prédéterminée et de la durée d'un créneau temporel.

8. Procédé selon l'une quelconque des revendications précédentes, consistant en outre à faire en sorte que le récepteur divise un créneau temporel reçu identifié en deux parties séparées, la première partie comprenant une première portion du créneau temporel et la seconde partie contenant les données restantes du créneau temporel ;
faire en sorte que le récepteur détermine ensuite des informations de traitement du signal permettant de traiter le créneau temporel à partir de la première partie du créneau temporel ; et
faire en sorte que le récepteur utilise ensuite les données déterminées à partir de la première partie du créneau temporel pour traiter les première et seconde parties du créneau temporel.

9. Procédé de mise en fonctionnement d'un récepteur selon la revendication 8, dans lequel les première et seconde parties dudit créneau temporel sont traitées ensemble.

10. Procédé de mise en fonctionnement d'un récepteur selon la revendication 8, dans lequel chaque partie dudit créneau temporel est traitée séparément.

11. Procédé selon la revendication 8, 9 ou 10, dans lequel la première partie du créneau temporel comprend les données contenues dans le créneau temporel reçu jusqu'à une position temporelle relative, dans le créneau temporel reçu, qui n'est pas supérieure à une position temporelle correspondant à la position qui aurait été la fin du créneau temporel s'il avait été reçu sans aucun retard par rapport aux créneaux temporels d'émission de l'émetteur/récepteur, et la seconde partie du créneau temporel est la portion restante du créneau temporel faisant suite à la première partie.

12. Procédé selon l'une quelconque des revendications précédentes, dans lequel une fois que la position temporelle d'un créneau temporel reçu d'un émetteur/récepteur particulier a été identifiée, la taille de la portion acquise sélectionnée du signal reçu sur laquelle l'analyse de la position temporelle est effectuée est réduite à une taille prédéterminée inférieure à sa taille initiale, laquelle taille inférieure est alors utilisée lors de la détermination de la position temporelle de tous les créneaux temporels suivants pendant cette réception particulière.

13. Procédé selon l'une quelconque des revendications précédentes, dans lequel la position temporelle relative de départ pour ladite analyse de la position temporelle du créneau temporel est sélectionnée pour être une période de retard temporel prédéterminée après la position temporelle de départ qui aurait été sélectionnée pour un créneau temporel dont on s'attend à ce qu'il soit reçu sans aucun retard.

14. Procédé selon l'une quelconque des revendications précédentes, dans lequel la position temporelle relative de départ pour ladite analyse de la position temporelle du créneau temporel est sélectionnée pour être une période de retard temporel prédéterminée après la position temporelle de départ du dernier créneau temporel d'émission du récepteur sur la fréquence d'émission associée.

15. Procédé selon la revendication 14, dans lequel, lorsque l'émetteur/récepteur reçoit des signaux d'émetteurs/récepteurs distants différents sur des créneaux temporels successifs, il commute entre la réception en provenance des différents émetteurs/récepteurs distants après que la période de temps prédéterminée se soit écoulée par rapport à la position de départ de son dernier créneau temporel d'émission.

16. Procédé selon la revendication 14 ou 15, dans lequel l'émetteur/récepteur (13) sélectionne la position temporelle relative de départ pour ladite analyse de la position temporelle du créneau temporel sous l'hypothèse que la position temporelle de départ de chaque créneau temporel dans ses signaux reçus est retardée, par rapport aux positions temporelles de départ de ses créneaux temporels d'émission, de la période de retard temporel prédéterminée.

17. Procédé selon l'une quelconque des revendications 14 à 16, dans lequel la période de retard temporel prédéterminée est fixée à une valeur égale à deux fois le temps de vol du signal pendant lequel un signal se propage du récepteur jusqu'à un rayon prédéterminé (R₁ ; R₂) par rapport au récepteur (22).

18. Procédé selon l'une quelconque des revendications 14 à 17, dans lequel ledit retard temporel prédéterminé pour la position de début de recherche du créneau temporel est utilisé pour la réception des seuls créneaux temporels reçus sélectionnés sur une fréquence porteuse donnée.

19. Procédé selon l'une quelconque des revendications 14 à 18, dans lequel ledit récepteur fonctionne sur une seconde paire de fréquences porteuses d'émission et de réception pour lesquelles la position temporelle de départ relative, dans le signal reçu utilisé lors de l'analyse de la position temporelle du créneau temporel, est retardée d'une quantité prédéterminée différente.

20. Procédé selon la revendication 19, dans lequel un transfert entre les deux paires de fréquences porteuses d'émission et de réception a pour base le retard temporel avec lequel des signaux sont reçus d'émetteurs/récepteurs distants.

21. Procédé selon l'une quelconque des revendications précédentes, dans lequel l'émetteur/récepteur primaire est une station de base (13 ; 17, 19 ; 22) d'un système de communication radio mobile.

22. Procédé selon l'une quelconque des revendications 1 à 21, dans lequel l'émetteur/récepteur primaire est une station mobile d'un système de communication radio mobile.

23. Procédé selon l'une quelconque des revendications précédentes, dans lequel les autres émetteurs/récepteurs comprennent des stations mobiles d'un système de communication radio mobile.

24. Récepteur destiné à un système de communication à accès multiples par répartition temporelle, lequel récepteur peut, lors de l'utilisation, recevoir des signaux provenant de différents autres émetteurs/récepteurs du système sur des créneaux temporels successifs et système dans lequel chaque créneau temporel émis comporte à son extrémité une période tampon prédéterminée (6, 7) dans laquelle aucune donnée utile n'est émise, le récepteur (13) comprenant :
un moyen pour identifier la position temporelle des créneaux temporels dans un signal reçu en analysant une partie acquise sélectionnée (5) du signal reçu pour chacun d'un ensemble de décalages temporels prédéterminés par rapport à une position temporelle relative de départ sélectionnée dans la portion acquise du signal reçu ;
dans lequel le décalage temporel maximum dans l'ensemble de décalages temporels prédéterminés est supérieur à la période tampon prédéterminée (6, 7) pendant laquelle aucune donnée utile n'est émise.

25. Emetteur-récepteur pour système de communication à accès multiples par répartition temporelle, lequel émetteur/récepteur (13) émet vers un ou plusieurs émetteurs/récepteurs distants du système et en reçoit des signaux, et système dans lequel chaque créneau temporel émis comporte à son extrémité une période tampon prédéterminée (6, 7) dans laquelle aucune donnée utile n'est émise, l'émetteur/récepteur comprenant :
un moyen pour identifier la position temporelle des créneaux temporels dans un signal reçu de l'un des émetteurs/récepteurs distants en analysant une portion acquise sélectionnée (5) du signal reçu pour chacun d'un ensemble de décalages temporels prédéterminés par rapport à une position temporelle relative de départ sélectionnée dans la portion acquise du signal reçu ; et
un moyen pour commander les émetteurs/récepteurs distants afin qu'ils n'émettent pas pendant une période de temps prédéterminée au début de chaque créneau temporel d'émission ;
dans lequel
le décalage temporel maximum, dans l'ensemble de décalages temporels prédéterminés, est supérieur à la période tampon prédéterminée (6, 7) à la fin de chaque créneau temporel mais inférieur ou égal à la somme de la période tampon prédéterminée et de la période de temps prédéterminée au début de chaque créneau temporel d'émission pendant lequel les émetteurs/récepteurs distants sont commandés pour ne pas émettre.

26. Emetteur-récepteur pour système de communication à accès multiples par répartition temporelle, lequel émetteur/récepteur émet des signaux vers d'autres émetteurs/récepteurs du système et en reçoit des signaux, et système dans lequel chaque créneau temporel émis comporte à son extrémité une période tampon prédéterminée (6, 7) dans laquelle aucune donnée utile n'est émise, l'émetteur/récepteur (13) comprenant :
un moyen pour commander l'envoi de signaux vers lui par d'autres émetteurs-récepteurs du système de façon que lui seul reçoive des signaux des autres émetteurs/récepteurs dans des créneaux temporels alternés sur une fréquence porteuse donnée ; et
un moyen pour identifier la position temporelle des créneaux temporels dans un signal reçu en analysant une portion acquise sélectionnée (5) du signal reçu pour chacun d'un ensemble de décalages temporels prédéterminés par rapport à une position temporelle relative de départ sélectionnée dans la portion acquise du signal reçu ;
dans lequel le décalage temporel maximum, dans l'ensemble de décalages temporels prédéterminés, est supérieur à la période tampon prédéterminée (6, 7) dans laquelle aucune donnée utile n'est émise à la fin de chaque créneau temporel mais inférieur ou égal à la somme de la période tampon prédéterminée et de la durée d'un créneau temporel.

27. Récepteur ou émetteur/récepteur selon l'une quelconque des revendications 24 à 26, comprenant en outre : un moyen pour diviser un créneau temporel reçu identifié en deux parties séparées, la première partie comprenant une première portion du créneau temporel, et la seconde partie contenant les données restantes dans le créneau temporel ;
un moyen pour déterminer ensuite des informations de traitement des signaux pour le traitement du créneau temporel à partir de la première partie du créneau temporel ; et
un moyen pour utiliser ensuite les données déterminées à partir de la première partie du créneau temporel pour traiter les première et seconde parties du créneau temporel.

28. Récepteur ou émetteur/récepteur selon l'une quelconque des revendications 24 à 27, comprenant un moyen pour sélectionner la position temporelle relative de départ, pour ladite analyse de la position temporelle du créneau temporel, afin qu'elle se situe à un temps de retard prédéterminé après la position temporelle de départ qui serait sélectionnée pour un créneau temporel dont on s'attend à ce qu'il soit reçu sans aucun retard.

29. Récepteur ou émetteur/récepteur selon l'une quelconque des revendications 24 à 28, comprenant un moyen pour sélectionner la position temporelle relative de départ, pour ladite analyse de la position temporelle du créneau temporel, afin qu'elle se situe à un temps de retard prédéterminé après la position de départ du dernier créneau temporel d'émission du récepteur sur la fréquence d'émission associée.

30. Station de base d'un système de communication radio mobile comprenant un récepteur ou un émetteur/récepteur selon l'une quelconque des revendications 24 à 29.

31. Station mobile d'un système de communication radio mobile comprenant un récepteur ou un émetteur/récepteur selon l'une quelconque des revendications 24 à 29.

32. Logiciel informatique spécifiquement conçu pour mettre en oeuvre le procédé de l'une quelconque des revendications 1 à 23 lorsqu'il est installé sur un moyen de traitement de données.
